# EUROPEAN PATENT SPECIFICATION

(11) **EP 4 076 919 B1**
(45) Date of publication and mention of the grant of the patent: **18.10.2023**
(21) Application number: 20853571.6
(22) Date of filing: 18.12.2020
(51) Int. Cl.: B29D 30/00, B29D 30/20

(54) **PROCESS AND PLANT FOR PRODUCING TYRES FOR VEHICLE WHEELS**
VERFAHREN UND ANLAGE ZUR HERSTELLUNG VON REIFEN FÜR FAHRZEUGRÄDER
PROCÉDÉ ET INSTALLATION POUR LA PRODUCTION DE PNEUS POUR DES ROUES DE VÉHICULE

(30) Priority: 19.12.2019 IT 201900024706
(43) Date of publication of application: 26.10.2022
(73) Proprietor: Pirelli Tyre S.p.A., 20126 Milano (IT)
(72) Inventor: CONTI, Davide, 20126 Milano (IT); DE COL, Christian, 20126 Milano (IT); PORTINARI, Gianni Enrico, 20126 Milano (IT)
(74) Representative: Porta & Consulenti Associati S.p.A.
(86) International application number: PCT/IB2020/062172
(87) International publication number: WO 2021/124239

(56) References cited:
- WO-A1-80/00327
- WO-A1-2010/070374

## Description

The present invention relates to a process and a plant for producing tyres for vehicle wheels.

The invention also relates to an oblique rotation member which can be used in the aforementioned process and plant.

A tyre for vehicle wheels generally comprises a carcass structure, a crown structure arranged in radially outer position with respect to the carcass structure and a pair of sidewalls that are the axially outer surfaces of the tyre, with respect to a mid-plane perpendicular to the rotation axis of the same tyre.

The carcass structure comprises at least one carcass ply formed of reinforcing cords incorporated in a matrix of elastomeric material. The carcass ply has opposite end edges respectively engaged with annular anchoring structures. The latter are arranged in the areas of the tyre usually identified by the name "beads" and each of them is usually formed of a substantially circumferential annular insert or "bead core" on which at least one filling insert is applied, in a radially outer position, the latter being radially tapered moving away from the rotation axis.

Specific reinforcing structures having the function of improving the transmission of torque to the tyre can be provided at the beads.

In the case of "tubeless" tyres, i.e. without air chamber, a layer of elastomeric material, generally known as "liner", can also be provided in a radially inner position with respect to the carcass structure to provide the necessary impermeability to the inflation air of the tyre. Generally, the liner extends from one bead to the other.

The crown structure comprises a belt structure and, in a radially outer position with respect to the belt structure, a tread band made of elastomeric material.

The belt structure comprises a belt layer, or more belt layers arranged in radial juxtaposition with respect to one another, comprising textile or metallic reinforcing cords having an orientation substantially parallel to the direction of circumferential extension of the tyre (zero degrees belt layer) or, in the case of more belt layers, a crossed orientation. In this last case, said zero degrees belt layer can be provided in a radially outer position with respect to the belt layers having a crossed orientation.

Longitudinal and transversal grooves are typically formed on the tread band and are arranged to define a desired tread pattern. Between the tread band and the belt structure a so-called "under-layer of the tread band" can be arranged, made of an elastomeric material having suitable properties for obtaining a stable union of the belt structure with the tread band itself.

The sidewalls are made of elastomeric material and define the axially outer surfaces with respect to the annular anchoring structures, the carcass ply(ies), the belt layer(s) and possibly at least one portion of tread band. For example, each sidewall extends from one of the lateral edges of the tread band up to the respective bead annular anchoring structure.

Throughout this description and in the claims, any numerical value is deemed to be preceded by the term "about" to also indicate any numerical value that differs slightly from the one indicated, for example to take into account the dimensional tolerances typical of the field of reference.

The term "elastomeric material" is used to indicate a composition comprising at least one elastomeric polymer and at least one reinforcing filler. Such a composition can also comprise additives like, for example, a cross-linking agent and/or a plasticizer. Thanks to the presence of the cross-linking agent, such a material can be cross-linked by heating, so as to form the final manufactured product.

The term "green tyre" is used to indicate a tyre obtained from the building process and not yet molded and vulcanized.

The term "finished tyre" is used to indicate a tyre obtained by subjecting a green tyre to a molding and vulcanization process.

The term "tyre" is used to indicate a finished tyre or a green tyre.

The terms "axial", "axially", "radial", "radially", "circumferential" and "circumferentially" are used with reference to the tyre or to a forming drum used in the production process of the tyre.

In particular, the terms "axial" and "axially" are used to indicate references/parameters arranged/measured or extending in a direction substantially parallel to the rotation axis of the tyre or of the forming drum.

The terms "radial" and "radially" are used to indicate references/parameters arranged/measured or extending in a direction substantially perpendicular to the rotation axis of the tyre or of the forming drum and lying in a plane comprising such a rotation axis.

The terms "circumferential" and "circumferentially" are used to indicate references/parameters arranged/measured or which extend along a circumference that extends around the rotation axis of the tyre or of the forming drum.

The term "structural component" of a tyre is used to indicate any portion of the tyre capable of performing its function or a part thereof. Examples of structural components of the tyre are the following components: the carcass structure, the crown structure, or parts thereof, like liner, under-liner, anti-abrasion inserts, bead core, filling inserts in the area of the bead (and therefore the annular anchoring structures defined by bead cores and respective filling inserts), carcass ply(ies), belt layer(s), belt under-layer, under-layer of the tread band, sidewalls, sidewall inserts, tread band, textile or metallic reinforcements, reinforcing elements made of elastomeric material etc., or a part thereof.

The term "manipulator" is used to indicate a device configured to support a forming drum and to move it independently along at least two Cartesian axes X, Y, Z. Preferably, the manipulator is capable of rotating the forming drum around at least one axis X, Y, Z.

The term "crossed belt structure" is used to indicate a belt structure comprising at least two belt layers arranged in radial juxtaposition over one another and each including a plurality of textile and/or metallic and/or hybrid parallel reinforcing cords, tilted with respect to the direction of circumferential extension of the tyre (and therefore to an axial mid-plane of the tyre), wherein the reinforcing cords of one belt layer are tilted with respect to said axial mid-plane by the same angle and on the opposite side to the reinforcing cords of another belt layer.

The term "support arm" is used to indicate a member configured to support a forming drum by itself, i.e. without the help or intervention of other members.

The term "belt assembly" is used to indicate an annular assembly comprising a crossed belt structure and a zero degrees belt layer arranged in a radially outer position with respect to the crossed belt structure.

The term "cylindrical shaping" of a belt assembly is used to indicate a building cycle aimed at obtaining a belt assembly having a substantially cylindrical shape.

The term "toroidal shaping" of a belt assembly is used to indicate a building cycle aimed at obtaining a belt assembly having a substantially toroidal shape, or having a profile in a radial section close to the profile in a radial section of the corresponding finished tyre.

The term "substantially toroidal forming drum" is used to indicate a forming drum the outer surface of which has a profile in a radial section such that, whatever semi-finished product is deposited thereon during the building of a tyre being processed, the semi-finished product takes a shape close to the shape taken in the finished tyre.

The term "tyre being processed" is used to indicate a tyre at any stage of the relative production process that goes from building at least one structural component up to obtaining the finished tyre. For example, a tyre being processed is the one which moves into a working station dedicated to building the carcass structure o the one which moves in a working station dedicated to building the belt assembly.

The term "building activity" is used to indicate any process carried out in any building device provided in any working station and that comprises the deposition or formation of a structural component on a forming drum. For example, a building activity is the one which comprises the deposition of the carcass ply(ies) or of the belt strips and/or of the zero degrees belt layer on a forming drum to respectively make the carcass structure, the belt structure or the belt assembly.

The term "functionally independent" is used to indicate the capability of a member or device to perform the function it is provided for in an autonomous manner, i.e. without interacting or cooperating with other members or devices which are provided to perform the same function.

The term "normal operation" is used to indicate the normal operating conditions of a tyre production plant, thus excluding possible starting or stopping transient periods of the plant itself, for example linked to a change of production batch.

The term "total cycle time of a building plant" is used to indicate the time that elapses between the exit of a tyre being processed from a building plant and the exit of the next tyre from the same building plant, in normal operating conditions.

The term "horizontal attitude" is used to indicate the position taken by a forming drum when the rotation axis thereof is oriented along a substantially horizontal direction with respect to the ground.

The term "vertical attitude" is used to indicate the position taken by a forming drum when the rotation axis thereof is oriented along a substantially vertical direction with respect to the ground.

The expressions "downstream"/"upstream" are used with reference to a direction of movement. Therefore, assuming for example a direction of movement from left to right, a "downstream" or "head" position with respect to any reference element indicates a position to the right of said reference element and an "upstream" or "tail" position indicates a position to the left of said reference element.

The production cycles of a tyre provide that, after a building process of a green tyre in which the various structural components of the tyre itself are built and assembled, the green tyres are transferred to a molding and vulcanization line wherein a molding and vulcanization process adapted to define the structure of the finished tyre according to a desired geometry and tread pattern is carried out.

The building of the structural components of the tyres and the subsequent assembly thereof is carried out on suitable forming drums. For example, the carcass structure can be built on a first forming drum, known as first stage drum, and the crown structure can be built on a second forming drum, known as auxiliary or second stage drum. The assembly of the carcass structure to the crown structure can be carried out on the first forming drum, in which case the first stage drum takes the name of single stage or "unistage" drum, or on a different forming drum, known as shaping drum.

An example of a plant for producing green tyres is described in WO 2010/070374. Such a plant comprises:
- at least one building line for building the carcass structure on a first forming drum, comprising a plurality of working stations arranged according to a sequential series;
- at least one building line for building the crown structure on at least one second forming drum, comprising a plurality of working stations arranged according to a sequential series; and
- at least one shaping and assembling station of the tyre being processed adapted to shape said carcass structure on the first forming drum of the carcass structure by assembling it to said crown structure.

WO 80/00327A1 describes a tire building apparatus comprising turret means which rotate about an inclined axis oriented at an angle of between 35 and 36 degrees with respect to a horizontal plane and a triad of identical tire building drums mounted on said turret for rotation about respectively orthogonally related drum axes. The orthogonally related drum axes are non-intersecting and spaced apart from each other and from said inclined axis to accommodate bearing means by which said drums are supported. Rotation means are associated respectively with each of said drum means to effect rotation thereof independently of the rotation of the other two drums. Indexing means are associated with said turret means to effect intermittent rotation of said turret means successively to position each of said drums to an axially vertical orientation.

The Applicant has observed that the total cycle time of a tyre production plant of the type described in WO 2010/070374, and therefore the productivity or efficiency of such a plant, is influenced both by the time necessary to carry out the various building activities on the various forming drums in transit inside the various working stations (such a time in turn including the time necessary to deposit the various structural components of the tyre on the forming drums at the building stations provided inside the single working stations and the time necessary to move the forming drums between the aforementioned building stations inside the working stations), and by the time necessary to carry the forming drums close to a working station and/or to move the forming drums from one working station to another. In order to reduce the total cycle time of the production plant it is therefore advisable to provide for solutions which allows to reduce the time dedicated to the building activities and/or the time dedicated to the movement of the forming drums outside of the working stations.

The Applicant has also observed that in order to carry out the building activities it is advisable that the forming drums have a horizontal attitude inside the working stations. According to the Applicant, on the other hand, it is preferable for the forming drums to take a vertical attitude when the forming drums are brought close to a working station during the movement thereof from one working station to another. This is due to the fact that, since the forming drums typically have great lengths and weights and are supported cantilevered when they are moved between the various working stations (which may also not be closely adjacent to one another), a possible movement thereof into a horizontal attitude would require the use of very bulky, as well as strong, movement devices, in order to effectively counteract the bending stresses caused by the high masses in play. Such movement devices would therefore have a negative impact on layout, costs and size of the plant.

The Applicant has therefore perceived that in order to allow the forming drums to take a horizontal attitude during the movement thereof inside the working stations and a vertical attitude during the movement thereof outside the working stations it is advisable to provide, close to at least some working stations, suitable service stations configured to:
- receive the forming drums in an initial attitude (such an initial attitude being horizontal in the case in which the forming drums come from inside a working station or vertical in the case in which the forming drums must be fed to a working station);
- carry out the change of attitude of the forming drums from horizontal to vertical or vice-versa;
- transfer the forming drums in the new attitude to proceed with the subsequent movement thereof outside of the working stations (in the case in which the new attitude is vertical) or inside a working station (in the case in which the new attitude is horizontal).

The Applicant has also realised that, with the aim of reducing as much as possible the total cycle time of the production plant without having negative impacts on the layout of the plant, it is advisable that the aforementioned change of attitude occurs quickly and in spaces that are as small as possible.

The Applicant has thus perceived that it is possible to obtain a quick change of the attitude of the forming drums from horizontal to vertical or vice-versa in small spaces by suitably manipulating the forming drums in each of the aforementioned service stations by a respective oblique drum rotation member arranged stably (or fixedly or irremovably) with respect to the ground and having a rotation axis tilted by 45° with respect to the ground.

The Applicant has finally found that by providing oblique rotation members of the type discussed above in the aforementioned service stations allows , once such oblique rotation members have picked up the forming drums in an initial attitude, horizontal or vertical, respectively, to change the attitude of the forming drums until a final attitude, vertical or horizontal, respectively, is obtained, simply by a rotation of the forming drums about the aforementioned rotation axis.

The present invention relates, in a first aspect thereof, to a process for producing tyres for vehicle wheels according to claim 1.

The Applicant believes that the use of an oblique rotation member of the type described above makes it possible to quickly change the attitude of the forming drum from horizontal to vertical and/or vice-versa in small spaces, allowing the same forming drum to take a horizontal attitude when it must be fed inside a working station to proceed with building a structural component of the tyre or a vertical attitude when it must be brought close to a working station and/or moved from one working station to another.

In a second aspect thereof, the invention relates to a plant for producing tyres for vehicle wheels according to claim 8.

A plant of the type described above is suitable for carrying out the process described above.

In a third aspect thereof, the invention relates to an oblique rotation member for a plant for producing tyres for vehicle wheels according to claim 12.

Such an oblique rotation member can be used in the plant described above to carry out the process described above.

In at least one of the aforementioned aspects, the present invention can have at least one of the preferred features described hereinafter.

Preferably, said oblique rotation member is irremovably arranged at said service station.

Preferably, the oblique rotation member is used in the carcass structure building lines and/or in the crown structure building lines of tyre production plants.

More preferably, the oblique rotation member is arranged, in the carcass structure building lines, close to the working station dedicated to depositing the carcass ply(ies) and, in the crown structure building line, close to the working station dedicated to building the belt assembly.

Preferably, it is provided that the first forming drum in horizontal attitude moves from a first position to a second position along a first direction of movement.

Preferably, it is provided that the first forming drum is arranged in at least one building station.

Preferably, said building station is arranged upstream of said second position with respect to said first direction of movement.

Preferably, it is provided that at least part of said first structural component of tyre is built on the first forming drum in said at least one building station.

In first preferred embodiments, the first forming drum has a vertical initial attitude and a horizontal final attitude.

In this case, preferably, said at least one building activity is carried out on the first forming drum after having picked up the first forming drum from said oblique rotation member.

Preferably, in the aforementioned first preferred embodiments said service station is adjacent to said first position.

Preferably, in the aforementioned first preferred embodiments, after having carried out said at least one building activity on the first forming drum the first forming drum is moved towards said first position along a direction of movement opposite to said first direction of movement.

Preferably, such movement is carried out with the first forming drum in horizontal attitude.

Preferably, during such movement no building activities are carried out on the first forming drum. Such movement can therefore be carried out quickly, with a consequent reduction of the cycle time of the plant.

The aforementioned first embodiments are considered by the Applicant particularly preferred when provided in the tyre carcass structure building line, and in particular close to the station configured to apply the carcass layer(s).

In second preferred embodiments, the first forming drum has an horizontal initial attitude and a vertical final attitude.

In this case, preferably, said at least one building activity is carried out on the first forming drum before transferring the first forming drum to said oblique rotation member.

Preferably, in the aforementioned second preferred embodiments said service station is adjacent to said first position.

Preferably, said service station is adjacent to said second position or to said first position.

Such second embodiments are considered by the Applicant particularly preferred when provided in the tyre crown structure building line, and in particular close to the belt assembly building station.

In some preferred embodiments, before driving the first forming drum in rotation by the oblique rotation member, said oblique rotation member is associated with a second forming drum in an initial attitude, vertical or horizontal, respectively. Such a provision makes it possible to provide the working station served by the aforementioned service station with a second forming drum on which a new building cycle can start immediately after having completed the building cycle on the first forming drum, with a consequent reduction of the cycle time of the plant. The use of the aforementioned second forming drum can also make it possible, in the crown structure building line, to carry out a toroidal shaping of the belt assembly, as discussed hereinafter.

Preferably, when the oblique rotation member is driven in rotation about said rotation axis until the first forming drum takes said final attitude, vertical or horizontal, respectively, the second forming drum is moved by the oblique rotation member about said rotation axis until the second forming drum takes a final attitude, horizontal or vertical, respectively.

Advantageously, in this way a simultaneous change of attitude of two forming drums is obtained, allowing the forming drum on which the building activity has been carried out to take the attitude (vertical) deemed most suitable for the transfer thereof to another working station and the forming drum on which the building activity must be carried out to take the attitude (horizontal) deemed most suitable to perform such an activity, with a consequent further reduction of the cycle time of the plant.

In some preferred embodiments, the first forming drum is substantially cylindrical.

In some preferred embodiments, the second forming drum is also substantially cylindrical.

The aforementioned preferred embodiments are preferably provided in the carcass structure building lines, or in the belt assemblies building lines when a cylindrical shaping of the belt assemblies has to be carried out.

In other preferred embodiments, only one of the first forming drum and second forming drum is substantially cylindrical.

In this case, preferably, the other forming drum is substantially toroidal. Such embodiments are preferably provided in the belt assemblies building lines when a toroidal shaping of the belt assemblies has to be carried out.

Preferably, said structural component of tyre is a carcass structure of the tyre. Consequently, the oblique rotation member is used in the carcass structure building line, preferably in the part of such a building line dedicated to depositing the carcass ply(ies).

Alternatively, said structural component of tyre is a crown structure of the tyre. Consequently, the oblique rotation member is used in the crown structure building line, preferably in the part of such a building line dedicated at least to building the belt assemblies.

Preferably, the oblique rotation member comprises a base frame. Such a base frame is configured to be irremovably arranged with respect to the ground, so as to not require large spaces for the operativity thereof.

Preferably, a moveable group is provided, the moveable group being rotatably associated with the base frame.

Preferably, the moveable group comprises a first support arm configured to support the first forming drum.

Preferably, the aforementioned first support arm has a first mounting axis extending along said substantially horizontal direction. When the first forming drum is mounted on the first support arm the aforementioned first mounting axis coincides with the rotation axis of the first forming drum.

Preferably, a motor is provided, the motor being configured to drive the rotation of the moveable group with respect to the base frame about said rotation axis. Such a movement allows the change of attitude of the first forming drum.

Preferably, the base frame comprises a service surface substantially perpendicular to said rotation axis. Such a service surface is therefore tilted by 45 ° with respect to the ground.

Preferably, the moveable group is rotatably associated with said service surface.

In some preferred embodiments, the moveable group comprises a second support arm configured to support a second forming drum.

Preferably, the second support arm has a second mounting axis substantially perpendicular to said first mounting axis. When the second forming drum is mounted on the second support arm the aforementioned second mounting axis coincides with the rotation axis of the second forming drum.

Preferably, both of the aforementioned support arms are fixedly connected to the moveable group, so that when the aforementioned motor drives the rotation of the moveable group with respect to the base frame the change of attitude of both the forming drums is obtained.

The longitudinal or axial dimensions of one or both of the aforementioned support arms can be selected depending on the position of the other devices or members intended to transfer/pick up the forming drums to/from the oblique rotation member.

Preferably, the oblique rotation member comprises a first damping device fixedly associated with the first support arm at a free end portion thereof.

Preferably, the first damping device is configured to couple with the first forming drum leaving a degree of freedom along a direction parallel to said first mounting axis. Such a device is configured to compensate possible thrusts to which the first forming drum is subjected when it is transferred to the oblique rotation member or picked up from the oblique rotation member.

Preferably, the first damping device comprises a first portion fixedly associated with the first support arm.

Preferably, the first damping device comprises a second portion coupled with the first forming drum.

Preferably, the second portion comprises a plurality of pneumatic cylinders.

Preferably, at least some cylinders of said plurality of pneumatic cylinders are functionally independent from at least other cylinders of said plurality of pneumatic cylinders.

The provision of functionally independent cylinders makes it possible to regulate the compensation action based on the attitude of the forming drum. The Applicant has indeed observed that, due to the gravity, when the forming drum is picked up/transferred in vertical attitude it is advisable that the compensation force offered by the compensation device is greater than when the forming drum is picked up/transferred in horizontal attitude. The provision of functionally independent pneumatic cylinders advantageously allows to vary the aforementioned compensation force as desired, by activating all or part of the aforementioned pneumatic cylinders when the forming drum is in vertical attitude and a smaller number of pneumatic cylinders when the forming drum is in horizontal attitude.

In some preferred embodiments, the oblique rotation member comprises a second damping device fixedly associated with the second support arm at a free end portion thereof.

Preferably, the second damping device is configured to couple with the second forming drum leaving a degree of freedom along a direction parallel to said second mounting axis.

Preferably, the second damping device is identical to the first damping device.

Further features and advantages of the present invention will become clearer from the following detailed description of a preferred embodiment thereof, made with reference to the attached drawings.

In such drawings:
- figure 1 is a schematic radial half-section view of a tyre that can be made by the process and the plant of the invention;
- figure 2 is a schematic top view of a plant for producing tyres for vehicle wheels according to an embodiment of the invention;
- figure 3 is a schematic top view of an embodiment of a working station provided in the carcass structure building line of the plant of figure 2;
- figures 4-18 are schematic top views of a first embodiment of a working station provided in the belt assemblies building line of the plant of figure 2 in various operating configurations thereof taken during the process of the invention;
- figure 19 is a schematic front view of an annular holding member provided in the building line of figures 4-18;
- figures 20 and 21 are schematic perspective views of an oblique rotation member provided in the working stations of figures 3-18, in two different operating configurations thereof.

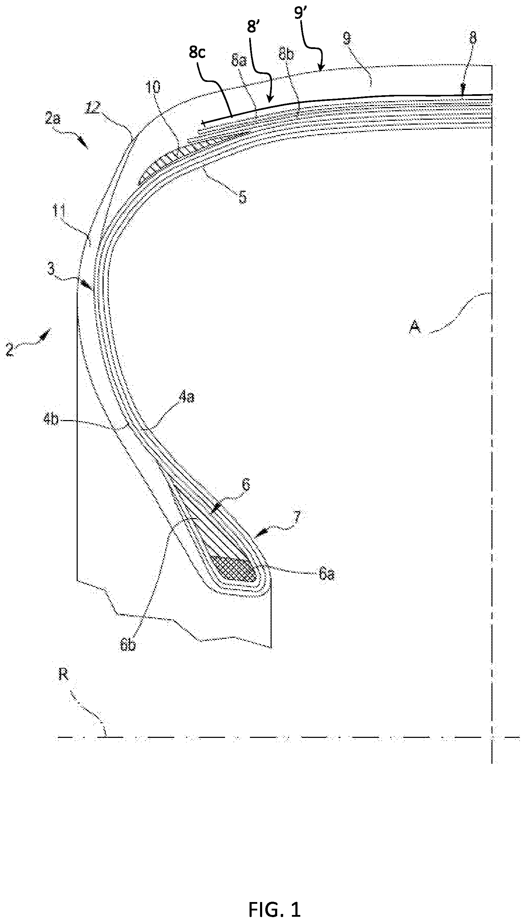

In figure 1, an example of a tyre that can be produced in a plant for producing tyres for vehicle wheels in accordance with the present invention is indicated with reference numeral 2. Such a tyre can be produced by carrying out the process of the present invention.

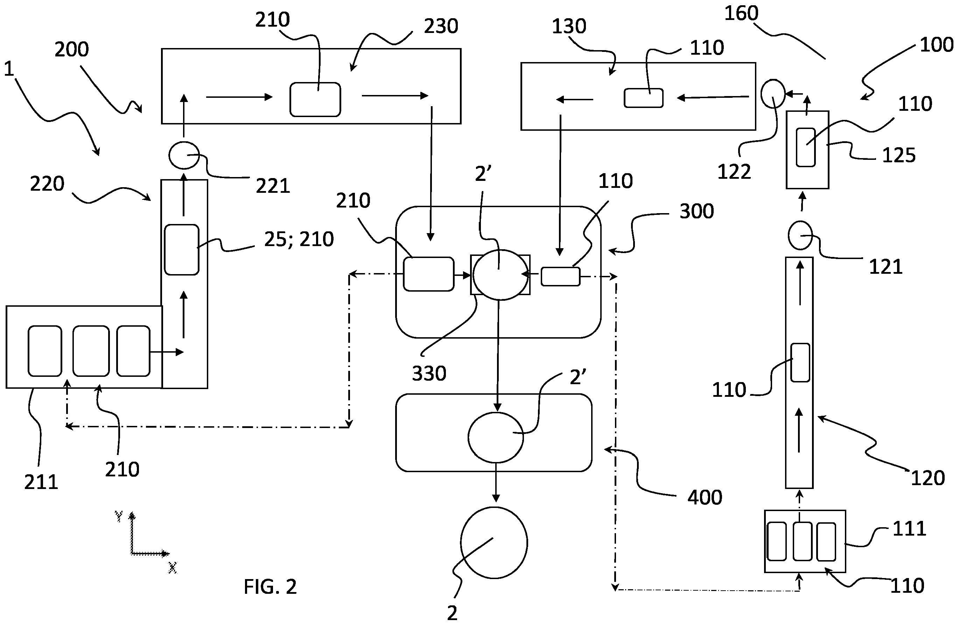

The tyre 2 has a mid-plane A perpendicular to the rotation axis R thereof (in figure 2 the position of the rotation axis R with respect to the section of the tyre 2 is shown in an indicative and schematic manner). The mid-plane A divides the tyre 2 into a first axial half 2a and a second axial half. For the sake of simplicity of illustration, figure 2 shows only the first axial half 2a of the tyre 2, the other half being substantially a mirror image of the first axial half 2a (except for the tread pattern that may not be symmetrical with respect to the aforementioned mid-plane A).

The tyre 2 substantially comprises a carcass structure 3 having one or two carcass plies 4a, 4b. A layer of impermeable elastomeric material or so-called liner 5 is applied in a radially inner position with respect to the carcass ply(ies) 4a, 4b.

Two annular anchoring structures 6 (only the one of the axial half 2a is shown in figure 2) are engaged, in axially opposite positions (with respect to the mid-plane A), to respective end edges of the carcass ply(ies) 4a, 4b. Each of the two annular anchoring structures 6 comprises a so-called bead core 6a carrying, in a radially outer position, an elastomeric filler 6b. The two annular anchoring structures 6 are integrated close to areas usually identified with the name of "beads" 7 (only the one of the axial half 2a of which is shown in figure 2), at which the engagement between the tyre 2 and a respective mounting rim usually occurs.

A crown structure 9' is arranged in a radially outer position with respect to the carcass structure 3, the crown structure 9' comprising a belt assembly 8' and a tread band 9 arranged in a radially outer position with respect to the belt assembly 8'.

The belt assembly 8' comprises a crossed belt structure 8 comprising two radially juxtaposed belt layers 8a, 8b, and a zero degrees belt layer 8c arranged in a radially outer position with respect to the crossed belt structure 8.

The crossed belt structure 8 can be associated with so-called "under-belt inserts" 10, each arranged between the carcass ply(ies) 4a, 4b and one of the axially opposite end edges of the crossed belt structure 8.

Two sidewalls 11, each extending from the corresponding bead 7 to a corresponding lateral edge of the tread band 9, are applied in axially opposite positions (with respect to the mid-plane A) on the carcass ply(ies) 4a, 4b. The assembly of the portion of each sidewall 11 close to the respective lateral edge of the tread band 9 and of each portion of the tread band 9 close to the respective sidewall 11 is known as shoulder 12 of the tyre 2.

Figure 2 shows a plant 1 for producing tyres 2 for vehicle wheels according to an embodiment of the invention.

The plant 1 comprises a carcass structures building line 100, a crown structures building line 200, a shaping and assembling machine 300 for obtaining a green tyre 2' and a molding and vulcanization station 400 for obtaining the finished tyre 2.

In a normal operation of the plant 1, the carcass structures building line 100 comprises a plurality of working stations (like for example the one indicated below with reference numeral 125) comprising respective building devices configured to build a plurality of carcass structures on respective forming drums 110 picked up from a first drum storage area 111.

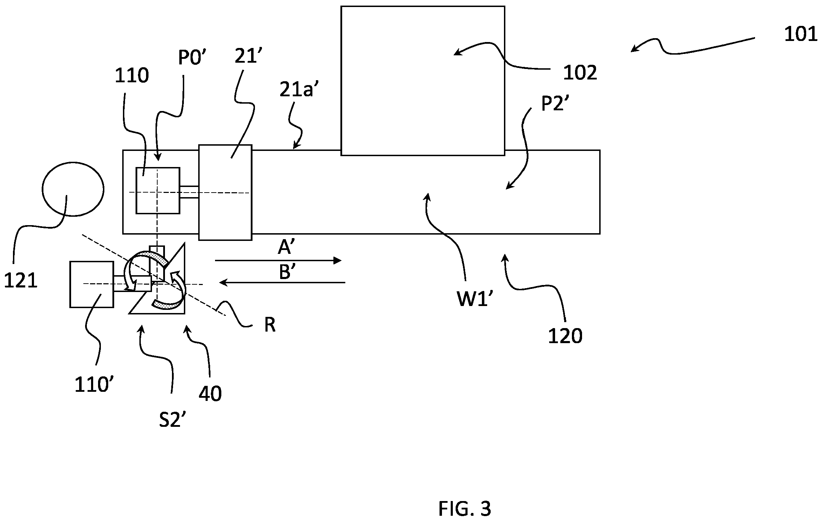

Similarly, the crown structures building line 200 comprises a plurality of working stations (like for example the one illustrated in figures 3-17) comprising respective building devices configured to build a plurality of crown structures on respective forming drums 25,210 picked up from a second drum storage area 211.

Preferably, the forming drums 110 are substantially cylindrical.

Instead, as to the forming drums that circulate in the crown structure building line 200, they are substantially cylindrical forming drums 25 in the case in which a cylindrical shaping of the belt assembly has to be carried out or substantially toroidal forming drums 210 in the case in which a toroidal shaping of the belt assembly has to be carried out.

The carcass structures building line 100 comprises a first path 120 comprising building devices configured to deposit on the forming drum 110 a first part of structural components of the carcass structure.

The first path 120 of the carcass structures building line 100 comprises for example:
- a station configured to apply a liner;
- a station configured to apply an under-liner;
- at least one station configured to apply a carcass ply;
- an optional station configured to apply metallic and/or textile reinforcements;
- an optional station configured to apply under-belt inserts.

The carcass structures building line 100 also comprises a second path 130 comprising building devices configured to build on the forming drum 110 a second part of structural components of the carcass structure.

The second path 130 of the carcass structures building line 100 comprises, for example:
- a station configured to apply anti-abrasion inserts by wrapping in a spiral a continuous elongated element around the first stage forming drum 110;
- an optional station configured to apply at least one portion of sidewalls by wrapping in a spiral a continuous elongated element around the forming drum 110.

Preferably, the first path 120 of the carcass structures building line 100 is substantially rectilinear.

Preferably, the second path 130 of the carcass structures building line 100 is substantially rectilinear and perpendicular to the first path 120.

In a corner area between the first path 120 and the second path 130 of the carcass structures building line 100 a working station 125 configured to form the beads of the tyre is arranged.

The carcass structures building line 100 also comprises a first drum transfer device 121 configured to transfer the forming drum 110 from the first path 120 to the beads formation station 125 and a second drum transfer device 122 configured to transfer the forming drum 110 from the beads formation station 125 to the second path 130.

Each of such drum transfer devices 121, 122 can comprise an anthropomorphous robot (for example a robotized arm having at least 6 movement axes) or a non-anthropomorphous Cartesian movement device, which allows movements according to three Cartesian axes X, Y, Z and, preferably, rotation around at least one, more preferably two of said Cartesian axes X and Y. The axes X and Y are indicated in figure 2, the axis Z being perpendicular to the axes X and Y.

Preferably, each forming drum 110 can be moved among the various working stations of the carcass structures building line 100 in a sequence which is the same as or different from the spatial sequence of such working stations.

The building of the first part of components of the carcass structure is preferably carried out along the first path 120 of the carcass structures building line 100 while the forming drum 110 is associated with a pair of axially opposite support rings (not shown).

The forming drum 110 is dissociated from the aforementioned pair of support rings in the beads formation station 125 and along the second path 130 of the carcass structures building line 100.

The crown structures building line 200 comprises a first path 220 comprising building devices configured to build on the forming drum 25, 210 a first part of structural components of the crown structure.

The first path 220 of the crown structures building line 200 comprises for example:
- an optional station configured to apply under-belt inserts (such a station is provided unless it is already comprised in the first path 120 of the carcass structures building line 100);
- at least one belt assembly building station;
- an optional station configured to apply an under-layer.

The crown structures building line 200 also comprises a second path 230 comprising building devices configured to build a second part of structural components of the crown structure.

The second path 230 of the crown structures building line 200 comprises for example:
- at least one station configured to apply a tread band by wrapping in a spiral a continuous elongated element around the forming drum 25, 210;
- an optional station configured to apply at least one portion of sidewalls by wrapping in a spiral a continuous elongated element around the forming drum 25, 210. This last station is at least provided in said second path 130 of the carcass structures building line 100 or in said second path 230 of the crown structures building line 200.

The crown structures building line 200 also comprises a drum transfer device 221 configured to transfer the forming drum 25, 210 from the first path 220 to the second path 230.

The drum transfer device 221 can comprise an anthropomorphous robot (for example a robotized arm with at least 6 movement axes) or a non-anthropomorphous Cartesian movement device, which allows movements according to three Cartesian axes X, Y, Z and, preferably, rotation around at least one, more preferably two of said Cartesian axes X and Y.

Preferably, each forming drum 25, 210 can be moved among the various working stations of the crown structures building line 200 in a sequence which is the same as or different from the spatial sequence of such working stations.

Preferably, the first path 220 of the crown structures building line 200 is substantially rectilinear.

More preferably, the first path 220 of the crown structures building line 200 is substantially parallel to the first path 120 of the carcass structures building line 100.

Preferably, the second path 230 of the crown structures building line 200 is substantially rectilinear and perpendicular to the first path 220.

The shaping and assembling machine 300 is configured to sequentially shape, one at a time, the carcass structures as they arrive from the carcass structures building line 100, and to assemble them to the respective crown structures as they arrive from the crown structures building line 200, so as to obtain respective green tyres 2'. In the specific example illustrated herein, the shaping and assembling machine 300 is configured to shape the carcass structures and to assemble them to the respective crown structures on a shaping drum 330. Therefore, it operates on carcass structures and crown structures which have been dissociated from the respective forming drums 110 and 210. Such forming drums 110 and 25, 210 are moved to return to the respective storage areas 111 and 211.

The built green tyres 2' which exit from the shaping and assembling machine 300 are transferred to the molding and vulcanization station 400 wherein a molding and vulcanization process configured to define the structure of the tyre according to a desired geometry and tread pattern is carried out, thus obtaining the finished tyres 2.

With reference to figure 3, the carcass structures building line 100 comprises a working station 101 configured to deposit on the forming drum 110 at least one carcass ply. Preferably, such a working station 101 is arranged at the first path 120 of the carcass structures building line 100.

The working station 101 comprises a trolley 21' moveable on a substantially rectilinear track 21a'. The track 21a' is arranged so as to allow a movement of the trolley 21' along a rectilinear direction of movement A', which is preferably parallel to the first path 120 of the carcass structures building line 100, and along a direction of movement B' opposite to the direction of movement A'.

During the movement thereof along the aforementioned movement directions A' and B' the trolley 21' supports the forming drum 110 in horizontal attitude.

Preferably, the forming drum 110 is substantially cylindrical. More preferably, the forming drum 110 is radially expand able/contractable.

The working station 101 comprises a building station W1'. At such a building station W1' a building device 102 is arranged, the building device 102 being configured to deposit on the forming drum 110 one or more carcass plies.

The trolley 21' is moveable along the movement directions A' and B' between a first position P0' and a second position P2' defined at the building station W1'.

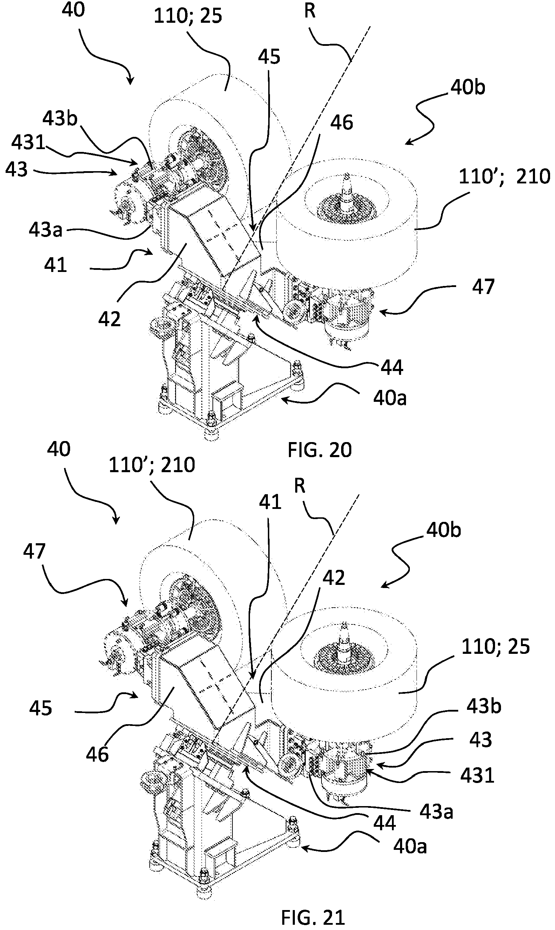

An oblique rotation member 40, shown in detail in figures 20 and 21, is arranged in a position adjacent to the first position P0'.

In the particular embodiment shown in the aforementioned figures, the oblique rotation member 40 comprises two support members 41, 45 of respective forming drums. However, an alternative embodiment of the oblique rotation member 40 is provided in which there is only one support member 41. Such an embodiment is preferably used in the working station 101 of figure 3 in place of the embodiment shown herein.

In the case in which the oblique rotation member 40 has only one support member 41, it is configured to support a first forming drum (for example the forming drum 110 described above).

In the cases in which the oblique rotation member 40 has two support members 41, 45, the support member 41 is configured to support a first forming drum (for example the forming drum 110 described above or the forming drum 25 discussed hereinafter, as shown in figures 20 and 21), whereas the support member 45 is configured to support a second forming drum (for example the forming drum 110' or 210 discussed hereinafter, as shown in figures 20 and 21).

The oblique rotation member 40 is preferably irremovably arranged in a second service station S2', i.e. when it is used it preferably remains in the same position with respect to the ground.

The oblique rotation member 40 comprises a base frame 40a stably positioned on the ground and a moveable group 40b rotatable with respect to the base frame 40a about a rotation axis R which is oblique with respect to the ground. In particular, the rotation axis R is tilted by an angle equal to 45° with respect to the ground.

The moveable group 40b is associated with a service surface 44 of the base frame 40a. Such a service surface is tilted by an angle equal to 45° with respect to the ground.

The two support members 41, 45, are fixedly associated with the moveable group 40b, so that the rotation of the moveable group 40b with respect to the base frame 40a about the rotation axis R causes the rotation of the support members 41, 45, about the rotation axis R. Such a rotation can be driven by a motor assembly not visible in the figures. The angle of rotation can be set as desired.

Each support member 41, 45 comprises a respective support arm 42, 46 and a respective mounting axis. When the support member 42, 46 supports a respective forming drum the mounting axis thereof coincides with the rotation axis of the respective forming drum.

The two support arms 42, 46 extend along directions substantially perpendicular to one another and are configured to support the forming drums so that the mounting axis of one of the two support members 41, 45 (and therefore the rotation axis of one of the two forming drums) is arranged along a substantially horizontal direction and the mounting axis of the other support member 45, 41 (and therefore the rotation axis of the other forming drum) is arranged along a substantially vertical direction.

In the operating configuration shown in figure 20, the support arm 42 supports the forming drum 110 or 25 so that the support member 41 is located in a loading/unloading position and the rotation axis of the forming drum 110 or 25 (and therefore the mounting axis of the support member 41) is arranged along a horizontal direction, whereas the support arm 46 supports the forming drum 110' or 210 so that the support member 45 is located in a waiting position and the rotation axis of the forming drum 110' or 210 (and therefore the mounting axis of the support member 45) is arranged along a vertical direction.

In the operating configuration shown in figure 21, the moveable group 40b has rotated by 180° about the rotation axis R. In this configuration the support members 41, 45 have exchanged their position, so that the support arm 42 supports the forming drum 110 or 25 so that the support member 41 is located in the aforementioned waiting position and the rotation axis of the forming drum 110 or 25 is arranged along the aforementioned vertical direction, whereas the support arm 46 supports the forming drum 110' or 210 so that the support member 45 is located in the aforementioned loading/unloading position and the rotation axis of the forming drum 110' or 210 is arranged along the aforementioned horizontal direction.

Each forming drum is supported by the respective support arm 42, 46 by a respective damping device 43, 47 configured to compensate possible axial movements of the forming drum. Such a damping device 43, 47 therefore couples together a support arm 42, 46 with the respective forming drum leaving a degree of freedom along a direction parallel to the mounting axis of the respective support arm 42, 46.

The damping devices 43, 47 are identical. Therefore, only the damping device 43 is described hereinafter.

Each damping device 43, 47 comprises a first portion 43a fixedly associated with a free end portion of the support arm 42 and a second portion 43b fixedly associated with the forming drum.

The second portion 43b comprises a plurality of pneumatic cylinders 431.

Some of the pneumatic cylinders 431 are functionally independent from the others so as to allow a different degree of compensation depending on whether the forming drum is arranged with its rotation axis extending along a horizontal direction or a vertical direction.

With reference to figure 3, the deposition of the carcass ply(ies) on the forming drum 110 at first comprises loading the forming drum 110 in vertical attitude on the oblique rotation member 40.

As described hereinafter, the oblique rotation member 40 is at this point driven in rotation to bring the forming drum 110 in horizontal attitude and transfer it to the trolley 21', which is located close to the first position P0'.

The trolley 21' is thus moved along the first direction of movement A' and stopped when the forming drum 110 is located in the second position P2' defined at the building station W1'. Thereafter, the deposition of the carcass ply(ies) on the forming drum 110 is then carried out by the building device 102.

The trolley 21' is subsequently moved along the second direction of movement B' to bring the forming drum 110 to the first position P0'. During such movement, no building activities are carried out on the forming drum 110.

In an embodiment of the working station 101, after the forming drum 110 has returned to the first position P0' it is transferred to the oblique rotation member 40, which is once again driven in rotation to bring the forming drum 110 in vertical attitude.

In other embodiments of the working station 101, such as the one shown in figure 3, the picking up of the forming drum 110 from the trolley 21' is carried out by the aforementioned drum transfer device 121, which is arranged in a position adjacent to the first position P0'. In this case, therefore, the oblique rotation member 40 is used only to load the forming drum 110 on the trolley 21'.

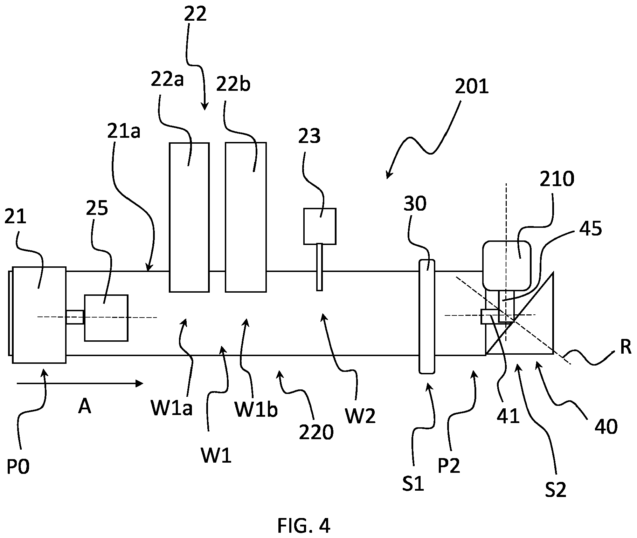

Figures 4-18 show a possible use of the oblique rotation member in the crown structures building line 200 when a toroidal shaping of the belt assembly has to be carried out.

In this case the crown structures building line 200 comprises a belt assembly building device 201. Preferably, such a device 201 is arranged at the first path 220 of the crown structures building line 200.

The belt assembly building device 201 comprises a trolley 21 moveable on a substantially rectilinear track 21a. The track 21a is arranged so as to obtain a movement of the trolley 21 along a rectilinear direction of movement A, which is preferably parallel to the first path 220 of the crown structures building line 200, and along a direction of movement B opposite to the direction of movement A.

As described hereinafter, during the movement thereof the trolley 21 supports a substantially cylindrical forming drum 25 in order to build thereon a belt assembly or only part thereof, depending on whether a cylindrical shaping of the belt assembly has to be carried out (in which case the trolley 21 always supports only the substantially cylindrical forming drum 25) or a toroidal shaping of the belt assembly has to be carried out (in which case the trolley 21 supports the substantially cylindrical forming drum 25 for a first part of the belt assembly building process and the substantially toroidal forming drum 210 for the remaining part of the belt assembly building process).

The forming drums 25 and 210 are radially contractable/expandable. Both of them comprise a plurality of angular sectors that are radially moveable in a synchronous manner. The angular sectors of the forming drum 25 are shaped so as to provide the forming drum 25 with a substantially cylindrical geometry whatever the radial dimension thereof, whereas the angular sectors of the forming drums 210 are shaped so as to provide the forming drum 210 with a substantially toroidal geometry whatever the radial dimension thereof.

The belt assembly building device 201 comprises a first building station W1 arranged downstream of a first position (or starting position) P0 of the trolley 21 with reference to the direction of movement A and a second building station W2 arranged downstream of the first building station W1 with reference to the direction of movement A. The first position P0 can also be defined in the first building station W1.

The first building station W1 comprises a crossed belt structure building device 22. For this purpose, the first building station W1 comprises a first operative station W1a comprising a deposition apparatus 22a configured to deposit a first belt layer having a plurality of first reinforcing cords tilted with a first orientation and a second operative station W1b arranged downstream of the first operative station W1a with reference to the direction of movement A and comprising a deposition apparatus 22b configured to deposit a second belt layer having a plurality of second reinforcing cords tilted with a crossed orientation with respect to the orientation of the aforementioned first cords.

The second building station W2 comprises a deposition device 23 configured to deposit a zero degrees belt layer.

The belt assembly building device 201 comprises, downstream of the second building station W2 with reference to the direction of movement A, a first service station S1.

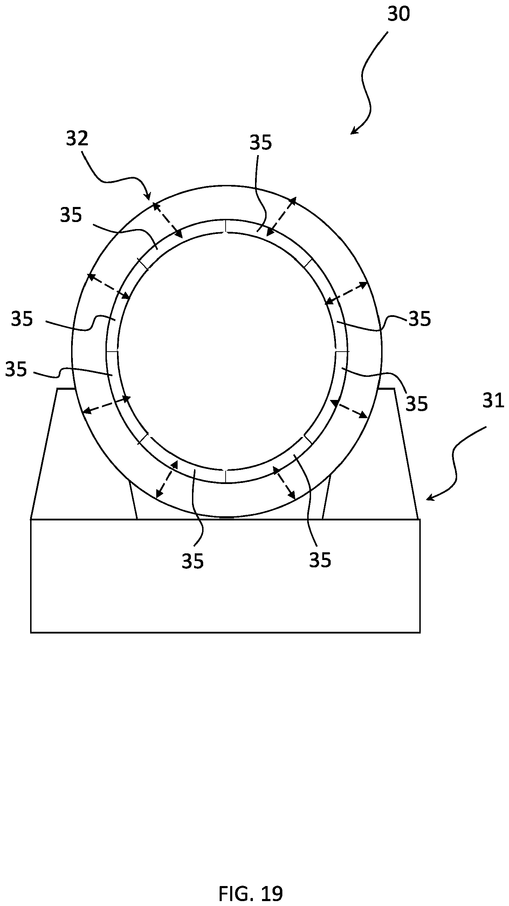

The first service station S1 comprises an annular holding member 30, shown in greater detail in figure 19.

The annular holding member 30 comprises a base block 31 and an annular body 32 fixedly associated with the base block 31.

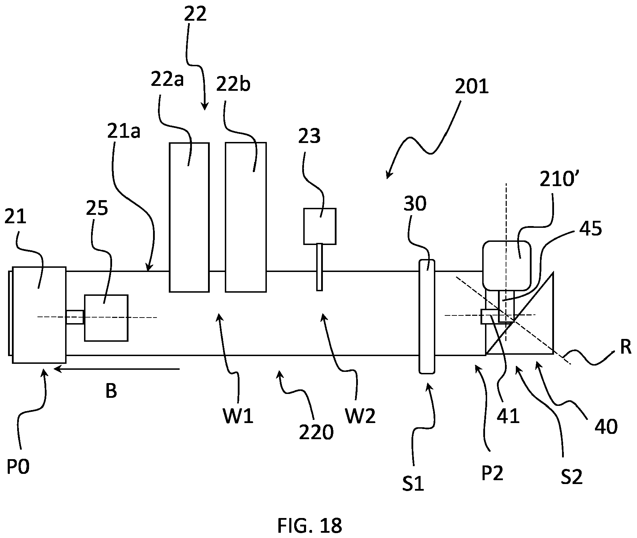

The annular body 32 comprises a plurality of angular sectors 35 (eight in the specific example shown in figure 18) circumferentially adjacent to one another and radially moveable in a synchronous manner, preferably upon receipt of a suitable electrical or pneumatic command, between a radially outermost operating position and a radially innermost non-operating position. Due to the possibility of movement of the angular sectors 35 the annular holding member 30 is therefore radially contractable/expandable.

In figure 19 the angular sectors 35 are shown in their non-operating position. Such a non-operating position corresponds to the configuration of maximum radial contraction of the annular holding member 30.

With reference to figures 4-18, the belt assembly building device 201 also comprises, downstream of the first service station S1 with reference to the direction of movement A, a second service station S2 in which an oblique rotation member 40 of the type described above is arranged.

The building device 201 of the belt assembly makes it possible to carry out both a cylindrical shaping of the belt assembly and a toroidal shaping of the belt assembly.

When a toroidal shaping of the belt assembly has to be carried out, like in the example shown in figures 4-18, the belt assembly building device 201 is configured to take the operative configuration shown in figure 4, wherein the trolley 21 is in its first position P0 (or in the first building station W1 in the case in which the first position P0 is defined in the first building station W1) and supports a substantially cylindrical forming drum 25. In this operative configuration, the support arm 42 of the oblique rotation member 40 is oriented so that the support member 41 is arranged in the aforementioned loading/unloading position (and therefore the mounting axis of the support member 41 is oriented along a horizontal direction), whereas the support arm 46 is oriented so that the support member 45 is arranged in the aforementioned waiting position (and therefore the mounting axis of the support member 45 is oriented along a vertical direction) and supports a substantially toroidal forming drum 210, as shown in figure 20.

Thereafter, the trolley 21 with the forming drum 25 is moved along the direction of movement A until the forming drum 25 is brought to the first building station W1. Such movement is not actuated when the first position P0 is defined in the first building station W1.

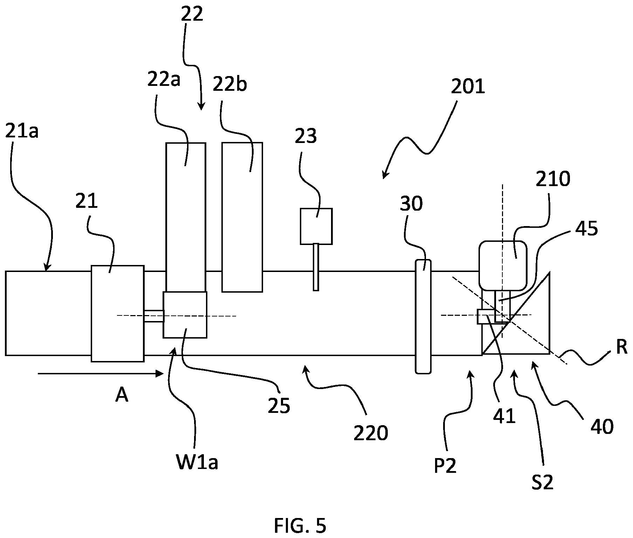

As shown in figure 5, the trolley 21 is stopped when the forming drum 25 is at the first operative station W1a, where a first belt layer, like for example the belt layer 8a of the tyre 2 of figure 1, is deposited on the forming drum 25 by the deposition apparatus 22a.

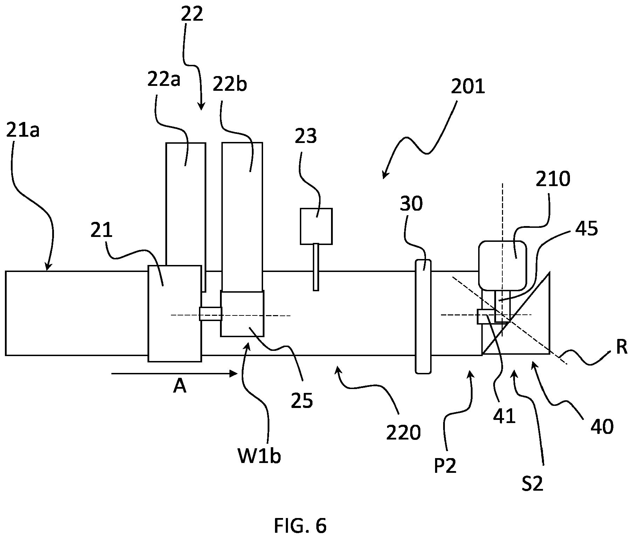

As shown in figure 6, the trolley 21 is subsequently moved along the direction of movement A and stopped when the forming drum 25 is at the second operative station W1b, where a second belt layer, like for example the belt layer 8b of the tyre 2 of figure 1, is deposited on the forming drum 25 by the deposition apparatus 22b in a radially outer position with respect to the first belt layer, thus building on the forming drum 25 a crossed belt structure, like for example the crossed belt structure 8 of the tyre 2 of figure 1.

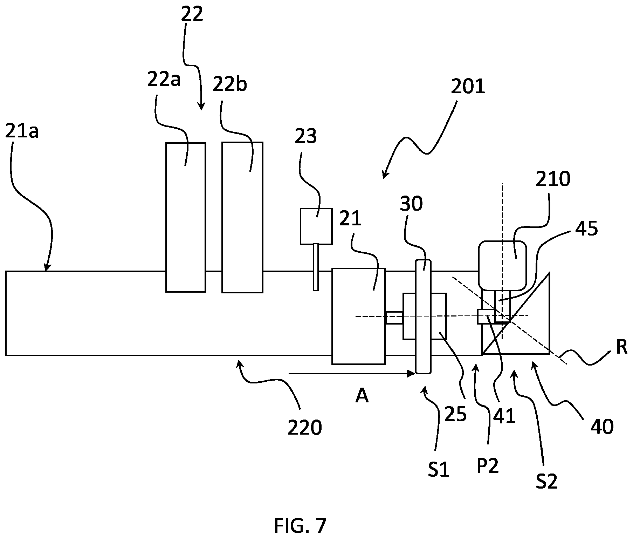

As shown in figure 7, the trolley 21 is subsequently moved along the direction of movement A and stopped when the forming drum 25, carrying the crossed belt structure, reaches the first service station S1 and is arranged in a radially inner position with respect to the annular holding member 30.

The crossed belt structure is then transferred from the forming drum 25 to the annular holding member 30. Such transferal comprises at first the radial contraction of the annular holding member 30 through a synchronous radial movement of the angular sectors 35 until the angular sectors 35 contact the crossed belt structure and, thereafter, the radial contraction of the forming drum 25 through a synchronous radial movement of the relative angular sectors.

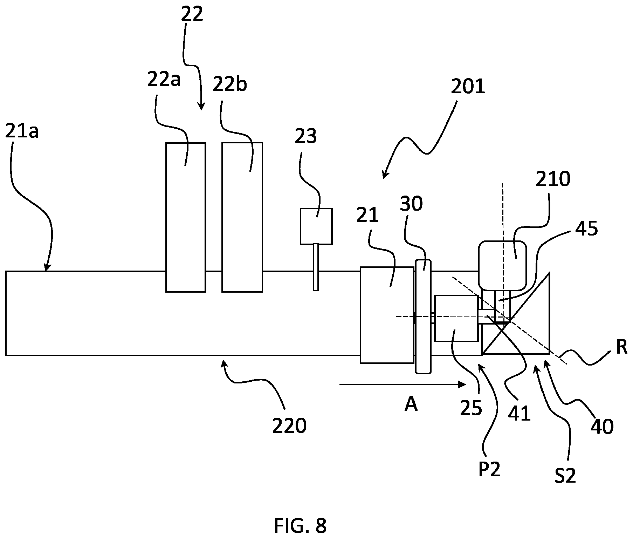

At this point the crossed belt structure remains fixedly connected to the annular holding member 30 and the trolley 21 is moved along the direction of movement A to bring the forming drum 25, without the crossed belt structure thereon, to the second service station S2, where it is transferred to the first support member 41, as shown in figure 8.

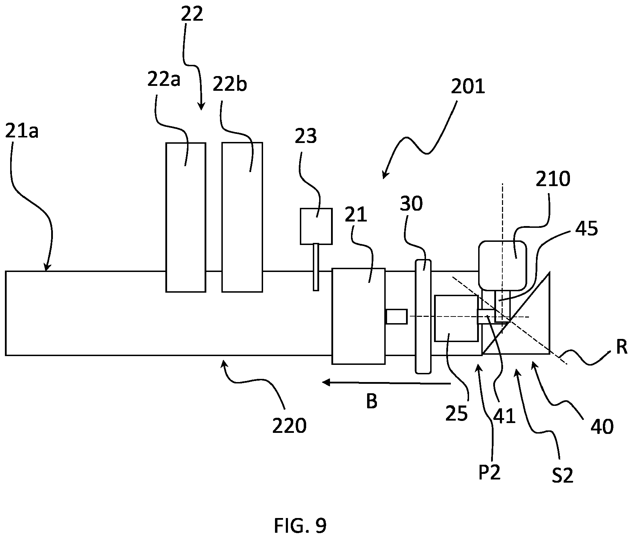

Thereafter, as shown in figure 9, the trolley 21 is moved along the direction of movement B so as to move away from the second service station S2.

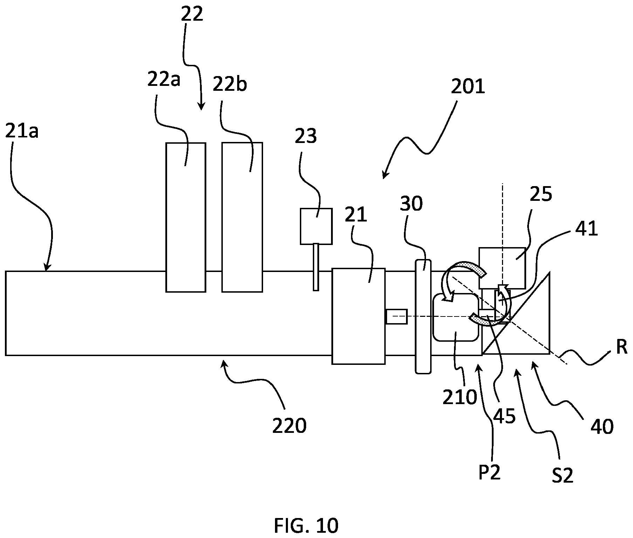

As shown in figure 10, at this point the moveable group 40b of the oblique rotation member 40 is driven in rotation about the rotation axis R by an angle of 180°. Such a rotation causes a rotation of the support member 41 about the rotation axis R until it is brought to the waiting position originally occupied by the support member 45 and, simultaneously, a rotation of the support member 45 about the rotation axis R until it is brought to the loading/unloading position originally occupied by the support member 41. The forming drum 25 thus has its rotation axis oriented along a vertical direction and the forming drum 210 has its axis oriented along a horizontal direction, as shown in figure 21.

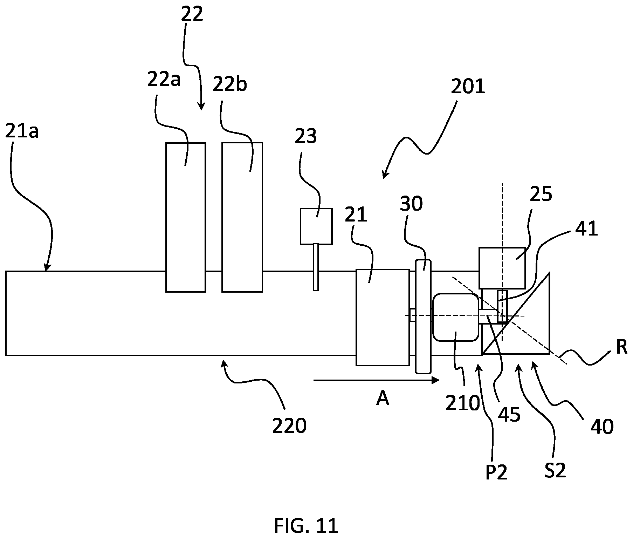

Thereafter, as shown in figure 11, the trolley 21 is moved along the direction of movement A so as to pick up the forming drum 210 from the support member 45.

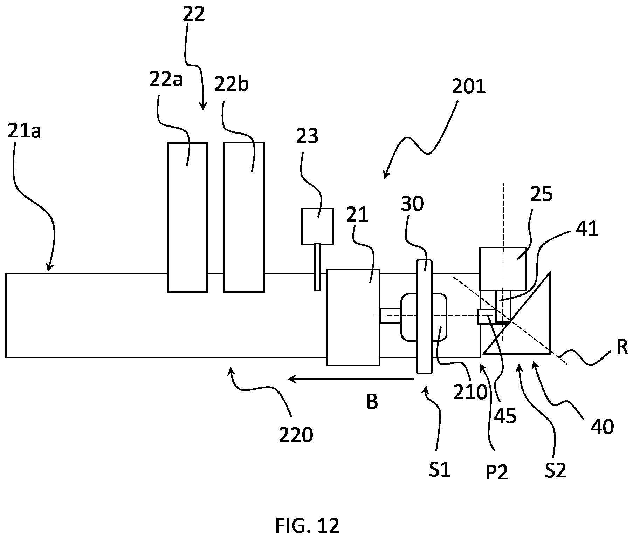

Thereafter, as shown in figure 12, the trolley 21 is moved along the direction of movement B until the forming drum 210 is arranged in the first service station S1, in a radially inner position with respect to the annular holding member 30.

The crossed belt structure is then transferred from the annular holding member 30 to the forming drum 210. Such a transfer comprises the radial expansion of the forming drum 210 through a synchronous radial movement of its angular sectors until such angular sectors bring the forming drum 210 to take an expanded condition in which the aforementioned angular sectors are in contact with the crossed belt structure supported by the annular holding member 30. In order to facilitate the aforementioned transfer it is a radial expansion of the annular holding member 30 can be provided when the forming drum 210 has taken to the aforementioned expanded condition. The radial expansion of the annular holding member 30 can also be at least in part simultaneous with the radial expansion of the forming drum 210.

Preferably, the forming drum 210 remains in the aforementioned expanded condition up to the end of the crown structure building cycle.

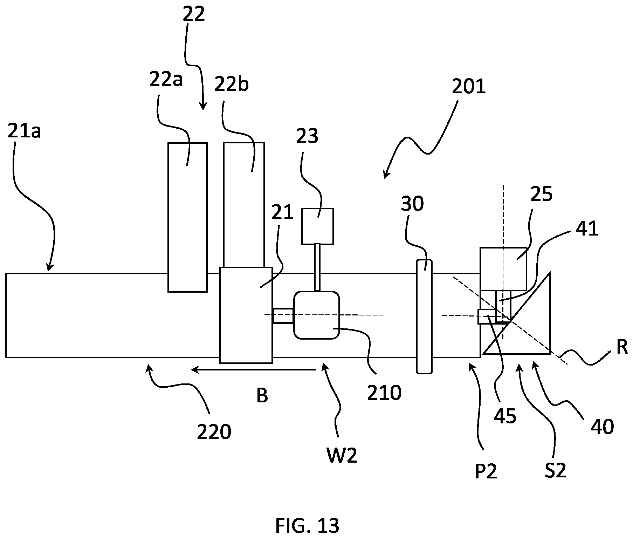

Once the crossed belt structure has been transferred to the forming drum 210, as shown in figure 13, the trolley 21 is moved along the direction of movement B to bring the forming drum 210, with the crossed belt structure thereon, to the second building station W2, where the zero degrees belt layer, like for example the zero degrees belt layer 8c of the tyre 2 of figure 1, is deposited on the forming drum 210, in a radially outer position with respect to the crossed belt structure. In this way, the desired toroidal shaping of the belt assembly, like for example the belt assembly 8' of the tyre 2 of figure 1, is obtained.

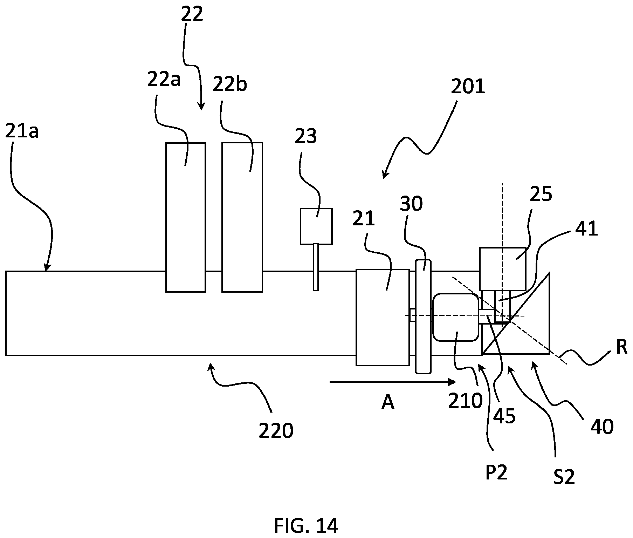

Thereafter, as shown in figure 14, the trolley 21 is moved along the direction of movement A to bring the forming drum 210, with the belt assembly thus formed thereon, to the second service station S2, where it is transferred to the second support member 45.

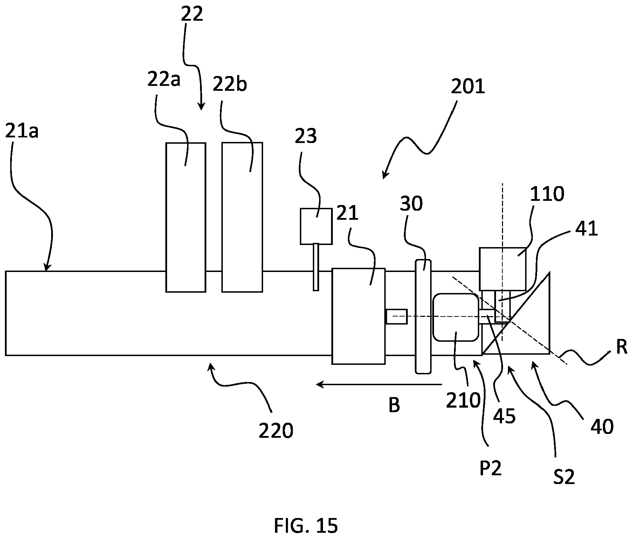

The trolley 21 is subsequently moved along the direction of movement B so as to move away from the second service station S2, as shown in figure 15.

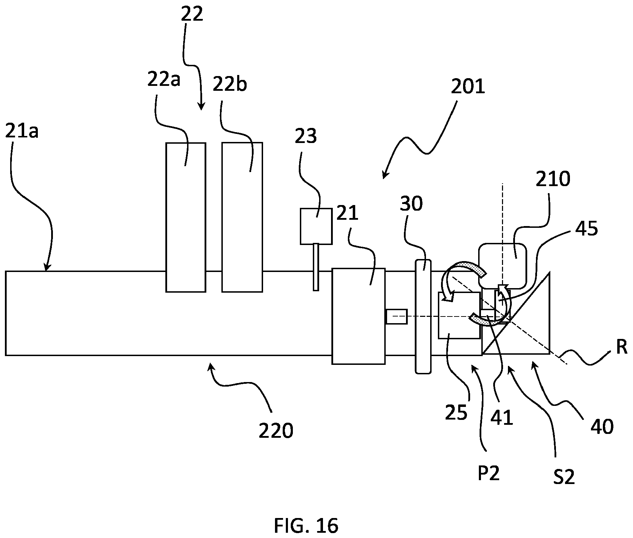

As shown in figure 16, at this point the moveable group 40b of the oblique rotation member 40 is driven in rotation about the rotation axis R by an angle of 180°. Such a rotation causes a rotation of the support member 45 about the rotation axis R until it is brought to the waiting position previously occupied by the support member 41 and, simultaneously, a rotation of the support member 41 about the rotation axis R until it is brought to the loading/unloading position previously occupied by the support member 45. The forming drum 210 thus has its rotation axis oriented along a vertical direction and the forming drum 25 has its axis oriented along a horizontal direction, as shown in figure 22.

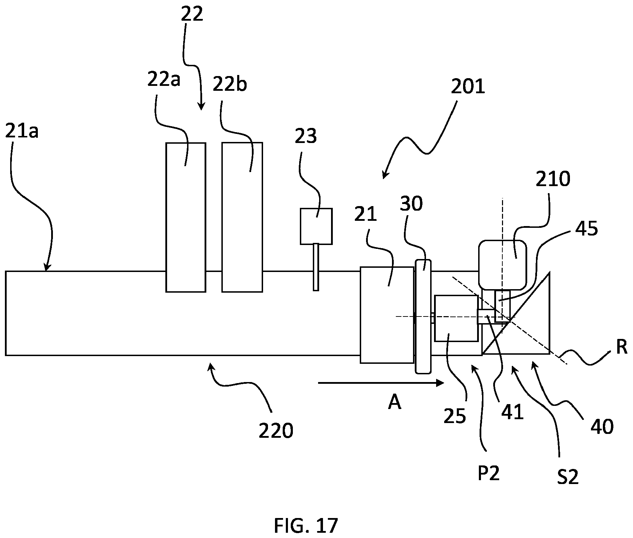

Thereafter, as shown in figure 17, the trolley 21 is moved along the direction of movement A so as to pick up the forming drum 25 from the support member 41.

Thereafter, as shown in figure 18, the trolley 21 with the forming drum 25 is moved along the direction of movement B until it goes back to its first position P0 (or to the first building station W1 in the case in which the first position P0 is defined in the first building station W1). During such a movement the forming drum 25 passes in a radially inner position with respect to the annular holding member 30 without stopping in the first service station S1, in the second building station W2 and, in the case in which the first position P0 is not defined in the first building station W1, in such a first building station W1.

Shortly before, or during or just after the movement of the trolley 21 to bring the forming drum 25 from the second service station S2 to the first position P0 (or to the first building station W1 in the case in which the first position P0 is defined in the first building station W1), the drum transfer device 221, shown in figure 2, picks up the forming drum 210 from the support member 45 to send it to the path 230 of the crown structures building line 200 and a new substantially toroidal forming drum 210', shown in figure 18, is arranged on the support member 45, preferably again by the drum transfer device 221.

The building device 201 of the belt assembly described above can thus proceed with a new building cycle of a belt assembly having a toroidal shaping, repeating the actions described above.

From the above description it is clear that in a normal operation of the plant of figure 2 a plurality of substantially toroidal forming drums 210, 210' enter into/exit from the belt assembly building device 201 in succession, whereas the forming drum 25 always remains inside such a building device 201.

Preferably, in the plant of figure 2 there are 5 or 6 substantially toroidal forming drums that circulate simultaneously in the crown structures building line 200.

Such forming drums have diameters, in the contracted configuration thereof, preferably comprised between 500 mm and 900 mm and allow a maximum radial expansion equal to 300 mm. Consequently, the annular holding member 30 must also be able to have a similar radial expansion.

When a cylindrical shaping of the belt assembly has to be carried out, the building device 201 of the belt assembly is configured to take an operating configuration that differs from the one shown in figure 4 only in that the support member 45 also supports a substantially cylindrical forming drum, hereinafter indicated as second substantially cylindrical forming drum, which is totally equivalent to the substantially cylindrical forming drum 25 described earlier.

Thereafter, the trolley 21 with the forming drum 25 is moved along the direction of movement A until the forming drum 25 is brought into the first building station W1.

In an analogous manner to what is shown in figure 4, the trolley 21 is stopped when the forming drum 25 is located at the first operative station W1a, where the first belt layer is deposited on the forming drum 25 by the deposition apparatus 22a.

In an analogous way to what is shown in figure 5, the trolley 21 is subsequently moved along the direction of movement A and stopped when the forming drum 25 is at the second operative station W1b, where the second belt layer is deposited on the forming drum 25 by the deposition apparatus 22b , in a radially outer position with respect to the first belt layer, thus building on the forming drum 25 the crossed belt structure.

Thereafter, the trolley 21 is subsequently moved along the direction of movement A and stopped when the forming drum 25 reaches the second building station W2, where the zero degrees belt layer is deposited on the forming drum 25 by the deposition device 23, in a radially outer position with respect to the crossed belt structure, thus obtaining the desired cylindrical shaping of the belt assembly.

Thereafter, the trolley 21 is moved along the direction of movement A until the forming drum 25, after having crossed the first service station S1, without stopping there and passing in a radially inner position with respect to the annular holding member 30, reaches the second service station S2, where it is transferred to the support member 41.

Thereafter, the trolley 21 is moved along the direction of movement B so as to move away from the second service station S2.

At this point the moveable group 40b of the oblique rotation member 40 is driven in rotation about the rotation axis R by an angle of 180°. Such a rotation brings the forming drum 25 to the position originally occupied by the second substantially cylindrical forming drum and the latter to the position originally occupied by the forming drum 25. The forming drum 25 thus has its rotation axis oriented along a vertical direction and the second substantially cylindrical forming drum has its axis oriented along a horizontal direction.

Thereafter, the trolley 21 is moved along the direction of movement A so as to pick up the second substantially cylindrical forming drum from the support member 45.

Thereafter, the trolley 21 with the second substantially cylindrical forming drum is moved along the direction of movement B until it goes back to its first position P0 (or to the first building station W1 in the case in which the first position P0 is defined in the first building station W1). During such movement the second substantially cylindrical forming drum passes in a radially inner position with respect to the annular holding member 30 without stopping in the first service station S1, in the second building station W2 and in the first building station W1.

Shortly before, or during or just after the movement of the trolley 21 to bring the second substantially cylindrical forming drum from the second service station S2 to the first position P0 (or to the first building station W1 in the case in which the first position P0 is defined in the first building station W1), the drum transfer device 221, shown in figure 2, picks up the forming drum 25 from the support member 41 to send it to the path 230 of the crown structures building line 200 and on the support member 41 is arranged, preferably again by the drum transfer device 221, a further substantially cylindrical forming drum, also totally equivalent to the substantially cylindrical forming drum 25 described earlier, in the case in which a cylindrical shaping of a new belt assembly has to be carried out, or a substantially toroidal forming drum, like for example the forming drum 210 shown in figures 4-18, in the case in which a toroidal shaping of the belt assembly has to be carried out.

The present invention has been described with reference to some preferred embodiments. Different modifications can be made to the embodiments described above, while remaining within the scope of protection of the invention defined by the following claims.

## Claims

1. A process for producing tyres for vehicle wheels, comprising:
- transferring a first forming drum (110; 25) in an initial attitude, horizontal or vertical, respectively, to an oblique rotation member (40) arranged at a service station (S2; S2') and having a rotation axis (R) tilted by 45° with respect to a substantially horizontal direction;
- driving said first forming drum (110; 25) in rotation about said rotation axis (R) by said oblique rotation member (40) until said first forming drum (110; 25) takes a final attitude, vertical or horizontal, respectively;
- picking up said first forming drum (110; 25) in said final attitude from said oblique rotation member (40);
- before transferring said first forming drum (110; 25) to said oblique rotation member (40) or after having picked up said first forming drum (110; 25) from said oblique rotation member (40), carrying out on said first forming drum (110; 25) at least one building activity of at least part of a first structural component (3; 8') of tyre while said first forming drum (110; 25) is in horizontal attitude.

2. The process according to claim 1, wherein carrying out said at least one building activity comprises:
- moving said first forming drum (110; 25) in horizontal attitude from a first position (P0; P0') to a second position (P2; P2') along a first direction of movement (A, A');
- arranging said first forming drum (110; 25) in at least one building station (W1; W1') arranged upstream of said second position (P2; P2') with respect to said first direction of movement (A; A');
- building at least part of said first structural component (3; 8') of tyre on said first forming drum (110; 25) in said at least one building station (W1; W1').

3. The process according to claim 1 or 2, wherein said first forming drum (110) has a vertical initial attitude and a horizontal final attitude, and said at least one building activity is carried out on said first forming drum (110) after having picked up said first forming drum (110) from said oblique rotation member (40).

4. The process according to claim 1 or 2, wherein said first forming drum (25) has a horizontal initial attitude and a vertical final attitude, and said at least one building activity is carried out on said first forming drum (25) before transferring said first forming drum (25) to said oblique rotation member (40).

5. The process according to any one of the previous claims, comprising, before driving said first forming drum (110; 25) in rotation by said oblique rotation member (40):
- associating a second forming drum (110'; 210) in an initial attitude, vertical or horizontal, respectively, with said oblique rotation member (40).

6. The process according to claim 5, wherein when said oblique rotation member (40) is driven in rotation about said rotation axis (R) until said first forming drum (110; 25) takes said final attitude, vertical or horizontal, respectively, said second forming drum (110'; 210) is moved by said oblique rotation member (40) about said rotation axis (R) until said second forming drum (110'; 210) takes a final attitude, horizontal or vertical, respectively.

7. The process according to claim 5 or 6, wherein said first forming drum (110; 25) and second forming drum (110') are substantially cylindrical or wherein one of said first forming drum (25) and said second forming drum (210) is substantially cylindrical and the other one of said first forming drum (25) and said second forming drum (210) is substantially toroidal.

8. A plant (1) for producing tyres for vehicle wheels, comprising:
- a first forming drum (110; 25) in an initial attitude, horizontal or vertical, respectively;
- an oblique rotation member (40) arranged at a service station (S2; S2') and having a rotation axis (R) tilted by 45° with respect to a substantially horizontal direction, said oblique rotation member (40) being configured to drive said first forming drum (110; 25) in rotation about said rotation axis (R) until said first forming drum (110; 25) takes a final attitude, vertical or horizontal, respectively;
- a movement member (21) configured to move said first forming drum (110; 25) from a first position (P0; P0') to a second position (P2; P2') along a first direction of movement (A; A') while the first forming drum (110; 25) is in said horizontal attitude;
- at least one building station (W1; W1') arranged upstream of said second position (P2; P2') with respect to said first direction of movement (A; A') and configured to build at least part of a first structural component (3; 8') of tyre on said first forming drum (110; 25).

9. The plant (1) according to claim 8, wherein said service station (S2; S2') is adjacent to said second position (P2) or to said first position (P0').

10. The plant (1) according to claim 8 or 9, wherein said oblique rotation member (40) comprises:
- a base frame (40a);
- a moveable group (40b) rotatably associated with said base frame (40a) and comprising a first support arm (42) configured to support said first forming drum (110; 25) and having a first mounting axis extending along said substantially horizontal direction;
- a motor (48) configured to drive the rotation of said moveable group (40b) with respect to said base frame (40a) about said rotation axis (R).

11. The plant (1) according to claim 10, wherein said moveable group (40b) comprises a second support arm (46) configured to support a second forming drum (110'; 210) and having a second mounting axis substantially perpendicular to said first mounting axis.

12. An oblique rotation member (40) for a plant (1) for producing tyres for vehicle wheels, comprising:
- a base frame (40a);
- a moveable group (40b) rotatably associated with said base frame (40a) and comprising a first support arm (42) configured to support a first forming drum (110; 25) and having a first mounting axis extending along a substantially horizontal direction;
- a motor (48) configured to drive the rotation of said moveable group (40b) with respect to said base frame (40a) about a rotation axis (R) tilted by 45° with respect to said substantially horizontal direction.

13. The oblique rotation member (40) according to claim 12, wherein said moveable group (40b) comprises a second support arm (46) configured to support a second forming drum (110'; 210) and having a second mounting axis substantially perpendicular to said first mounting axis.

14. The oblique rotation member (40) according to claim 12 or 13, comprising at least one first damping device (43) fixedly associated with said first support arm (42) at a free end portion thereof and configured to couple with said first forming drum (110; 25) while leaving a degree of freedom along a direction parallel to said first mounting axis.

15. The oblique rotation member (40) according to claim 14 when depending on claim 13, comprising a second damping device (47) fixedly associated with said second support arm (46) at a free end portion thereof and configured to couple with said second forming drum (110'; 210) while leaving a degree of freedom along a direction parallel to said second mounting axis, wherein said second damping device (47) is identical to said first damping device (43).

## Patentansprüche

1. Verfahren zum Produzieren von Reifen (100) für Fahrzeugräder, umfassend:
- Übertragen einer ersten Formtrommel (110; 25) in einer horizontalen bzw. vertikalen Ausgangslage auf ein schräges Rotationselement (40), das an einer Servicestation (S2; S2') ausgelegt ist und eine Rotationsachse (R) aufweist, die um 45° in Bezug auf eine im Wesentlichen horizontale Richtung geneigt ist;
- Antreiben der ersten Formtrommel (110; 25) in Rotation um die Rotationsachse (R) durch das schräge Rotationselement (40), bis die erste Formtrommel (110; 25) eine vertikale bzw. horizontale Endstellung einnimmt;
- Aufnehmen der ersten Formtrommel (110; 25) in der Endstellung von dem schrägen Rotationselement (40);
- vor dem Überführen der ersten Formtrommel (110; 25) zu dem schrägen Rotationselement (40) oder nachdem es die erste Formtrommel (110; 25) von dem schrägen Rotationselement (40) aufgenommen hat, Ausführen mindestens einer Aufbautätigkeit an der ersten Formtrommel (110; 25) von mindestens einem Teil einer ersten strukturellen Komponente (3; 8') des Reifens, während die erste Formtrommel (110; 25) in horizontaler Lage ist.

2. Verfahren nach Anspruch 1, wobei die Durchführung der mindestens einen Aufbautätigkeit Folgendes umfasst:
- Bewegen der ersten Formtrommel (110; 25) in horizontaler Lage von einer ersten Position (P0; P0') zu einer zweiten Position (P2; P2') entlang einer ersten Bewegungsrichtung (A, A');
- Anordnen der ersten Formtrommel (110; 25) in mindestens einer Aufbaustation (W1; W1'), die in Bezug auf die erste Bewegungsrichtung (A; A') vor der zweiten Position (P2; P2') ausgelegt ist;
- Aufbauen mindestens eines Teils der ersten strukturellen Komponente (3; 8') des Reifens auf der ersten Formtrommel (110; 25) in der mindestens einen Aufbaustation (W1; W1').

3. Verfahren nach Anspruch 1 oder 2, wobei die erste Formtrommel (110) eine vertikale Ausgangslage und eine horizontale Endlage aufweist und die mindestens eine Aufbautätigkeit an der ersten Formtrommel (110) durchgeführt wird, nachdem die erste Formtrommel (110) von dem schrägen Rotationselement (40) aufgenommen wurde.

4. Verfahren nach Anspruch 1 oder 2, wobei die erste Formtrommel (25) eine horizontale Ausgangslage und eine vertikale Endlage aufweist und die mindestens eine Aufbautätigkeit an der ersten Formtrommel (25) ausgeführt wird, bevor die erste Formtrommel (25) zu dem schrägen Rotationselement (40) übertragen wird.

5. Verfahren nach einem der vorhergehenden Ansprüche, das bevor die erste Formtrommel (110; 25) durch das schräge Rotationselement (40) in Rotation versetzt wird, Folgendes umfasst:
- Zuordnen einer zweiten Formtrommel (110'; 210) in einer vertikalen bzw. horizontalen Ausgangsstellung zu dem schrägen Rotationselement (40).

6. Verfahren nach Anspruch 5, wobei, wenn das schräge Rotationselement (40) um die Rotationsachse (R) in Rotation versetzt wird, bis die erste Formtrommel (110; 25) die Endstellung, vertikal bzw. horizontal, einnimmt, die zweite Formtrommel (110'; 210) durch das schräge Rotationselement (40) um die Rotationsachse (R) bewegt wird, bis die zweite Formtrommel (110'; 210) eine Endstellung, horizontal bzw. vertikal, einnimmt.

7. Verfahren nach Anspruch 5 oder 6, wobei die erste Formtrommel (110; 25) und die zweite Formtrommel (110') im Wesentlichen zylindrisch sind oder wobei eine der ersten Formtrommel (25) und der zweiten Formtrommel (210) im Wesentlichen zylindrisch ist und die andere der ersten Formtrommel (25) und der zweiten Formtrommel (210) im Wesentlichen toroidal ist.

8. Anlage (1) zum Produzieren von Reifen für Fahrzeugräder, umfassend:
- eine erste Formtrommel (110; 25) in einer horizontalen bzw. vertikalen Ausgangsstellung;
- ein schräges Rotationselement (40), das an einer Servicestation (S2; S2') angeordnet ist und eine Rotationsachse (R) aufweist, die in Bezug auf eine im Wesentlichen horizontale Richtung um 45° geneigt ist, wobei das schräge Rotationselement (40) so ausgelegt ist, dass es die erste Formtrommel (110; 25) in Rotation um die Rotationsachse (R) antreibt, bis die erste Formtrommel (110; 25) eine vertikale bzw. horizontale Endlage einnimmt;
- ein Bewegungselement (21), das dafür konfiguriert ist, die erste Formtrommel (110; 25) von einer ersten Position (P0; P0') zu einer zweiten Position (P2; P2') entlang einer ersten Bewegungsrichtung (A; A') zu bewegen, während die erste Formtrommel (110; 25) in der horizontalen Lage ist;
- mindestens eine Aufbaustation (W1; W1'), die in Bezug auf die erste Bewegungsrichtung (A; A') stromaufwärts der zweiten Position (P2; P2') angeordnet und dafür ausgelegt ist, mindestens einen Teil einer ersten strukturellen Komponente (3; 8') des Reifens auf der ersten Formtrommel (110; 25) aufzubauen.

9. Anlage (1) nach Anspruch 8, wobei die Servicestation (S2; S2') an die zweite Position (P2) oder an die erste Position (P0') angrenzt.

10. Anlage (1) nach Anspruch 8 oder 9, wobei das schräge Rotationselement (40) Folgendes umfasst:
- einen Basis-Rahmen (40a);
- eine bewegliche Gruppe (40b), die drehbar dem Basisrahmen (40a) zugeordnet ist und einen ersten Stützarm (42) umfasst, der dafür konfiguriert ist, die erste Formtrommel (110; 25) zu stützen und eine erste Befestigungsachse aufzuweisen, die sich entlang der im Wesentlichen horizontalen Richtung erstreckt;
- einen Motor (48), der dafür konfiguriert ist, die Drehung der beweglichen Gruppe (40b) in Bezug auf den Basisrahmen (40a) um die Drehachse (R) anzutreiben.

11. Anlage (1) nach Anspruch 10, wobei die bewegliche Gruppe (40b) einen zweiten Tragarm (46) umfasst, der dafür konfiguriert ist, eine zweite Formtrommel (110'; 210) zu tragen, und der eine zweite Befestigungsachse aufweist, die im Wesentlichen senkrecht zu der ersten Befestigungsachse verläuft.

12. Schräges Rotationselement (40) für eine Anlage (1) zum Produzieren von Reifen für Fahrzeugräder, umfassend:
- einen Basis-Rahmen (40a);
- eine bewegliche Gruppe (40b), die drehbar dem Basisrahmen (40a) zugeordnet ist und einen ersten Stützarm (42) umfasst, der dafür konfiguriert ist, eine erste Formtrommel (110; 25) zu stützen und eine erste Befestigungsachse aufzuweisen, die sich entlang einer im Wesentlichen horizontalen Richtung erstreckt;
- einen Motor (48), der dafür konfiguriert ist, die Drehung der beweglichen Gruppe (40b) in Bezug auf den Basisrahmen (40a) um eine Drehachse (R) anzutreiben, die um 45° in Bezug auf die im Wesentlichen horizontale Richtung geneigt ist.

13. Schräges Rotationselement (40) nach Anspruch 12, wobei die bewegliche Gruppe (40b) einen zweiten Tragarm (46) umfasst, der dafür konfiguriert ist, eine zweite Formtrommel (110'; 210) zu tragen, und der eine zweite Befestigungsachse aufweist, die im Wesentlichen senkrecht zu der ersten Befestigungsachse verläuft.

14. Schräges Rotationselement (40) nach Anspruch 12 oder 13, umfassend mindestens eine erste Dämpfungsvorrichtung (43), die dem ersten Tragarm (42) an einem freien Endabschnitt desselben fest zugeordnet und dafür konfiguriert ist, mit der ersten Formtrommel (110; 25) zu koppeln, während ein Freiheitsgrad entlang einer Richtung parallel zu der ersten Befestigungsachse belassen wird.

15. Schräges Rotationselement (40) nach Anspruch 14, wenn es von Anspruch 13 abhängt, umfassend eine zweite Dämpfungsvorrichtung (47), die dem zweiten Tragarm (46) an einem freien Endabschnitt desselben fest zugeordnet und dafür konfiguriert ist, mit der zweiten Formtrommel (110'; 210) zu koppeln, während ein Freiheitsgrad entlang einer Richtung parallel zu der zweiten Befestigungsachse belassen wird, wobei die zweite Dämpfungsvorrichtung (47) mit der ersten Dämpfungsvorrichtung (43) identisch ist.

## Revendications

1. Procédé de fabrication de pneumatiques pour roues de véhicule, comprenant :
- le transfert d'un premier tambour de formage (110 ; 25) dans une attitude initiale, horizontale ou verticale, respectivement, vers un élément de rotation oblique (40) disposé au niveau d'une station de service (S2 ; S2') et ayant un axe de rotation (R) incliné de 45° par rapport à une direction sensiblement horizontale ;
- l'entraînement dudit premier tambour de formage (110 ; 25) en rotation autour dudit axe de rotation (R) par ledit élément de rotation oblique (40) jusqu'à ce que ledit premier tambour de formage (110 ; 25) prenne une attitude finale, respectivement verticale ou horizontale ;
- la saisie dudit premier tambour de formage (110 ; 25) dans ladite attitude finale à partir dudit élément de rotation oblique (40) ;
- avant le transfert dudit premier tambour de formage (110 ; 25) audit élément de rotation oblique (40) ou après le saisie dudit premier tambour de formage (110 ; 25) dudit élément de rotation oblique (40), la réalisation sur ledit premier tambour de formage (110 ; 25) d'au moins une activité de construction d'au moins une partie d'un premier composant structurel (3 ; 8') de pneumatique alors que ledit premier tambour de formage (110 ; 25) est en position horizontale.

2. Procédé selon la revendication 1, dans lequel la réalisation de ladite au moins une activité de construction comprend :
- le déplacement dudit premier tambour de formage (110 ; 25) en position horizontale d'une première position (P0 ; P0') à une deuxième position (P2 ; P2') le long d'une première direction de déplacement (A, A') ;
- l'agencement dudit premier tambour de formage (110 ; 25) dans au moins une station de construction (W1 ; W1') agencée en amont de ladite deuxième position (P2 ; P2') par rapport à ladite première direction de déplacement (A ; A') ;
- la construction d'au moins une partie dudit premier composant structurel (3 ; 8') de pneumatique sur ledit premier tambour de formage (110 ; 25) dans ladite au moins une station de construction (W1 ; W1').

3. Procédé selon la revendication 1 ou 2, dans lequel ledit premier tambour de formage (110) a une attitude initiale verticale et une attitude finale horizontale, et ladite au moins une activité de construction est réalisée sur ledit premier tambour de formage (110) après la saisie dudit premier tambour de formage (110) dudit élément de rotation oblique (40).

4. Procédé selon la revendication 1 ou 2, dans lequel ledit premier tambour de formage (25) a une attitude initiale horizontale et une attitude finale verticale, et ladite au moins une activité de construction est réalisée sur ledit premier tambour de formage (25) avant le transfert dudit premier tambour de formage (25) audit élément de rotation oblique (40).

5. Procédé selon l'une quelconque des revendications précédentes, comprenant, avant l'entraînement dudit premier tambour de formage (110 ; 25) en rotation par ledit élément de rotation oblique (40) :
- l'association d'un deuxième tambour de formage (110' ; 210) dans une attitude initiale, respectivement verticale ou horizontale, audit élément de rotation oblique (40).

6. Procédé selon la revendication 5, dans lequel lorsque ledit élément de rotation oblique (40) est entraîné en rotation autour dudit axe de rotation (R) jusqu'à ce que ledit premier tambour de formage (110 ; 25) prenne ladite attitude finale, respectivement verticale ou horizontale, ledit deuxième tambour de formage (110' ; 210) est déplacé par ledit élément de rotation oblique (40) autour dudit axe de rotation (R) jusqu'à ce que ledit deuxième tambour de formage (110' ; 210) prenne une attitude finale, respectivement horizontale ou verticale.

7. Procédé selon la revendication 5 ou 6, dans lequel ledit premier tambour de formage (110 ; 25) et ledit deuxième tambour de formage (110') sont sensiblement cylindriques ou dans lequel l'un dudit premier tambour de formage (25) et dudit deuxième tambour de formage (210) est sensiblement cylindrique et l'autre parmi ledit premier tambour de formage (25) et ledit deuxième tambour de formage (210) est sensiblement toroïdal.

8. Installation (1) de fabrication de pneumatiques pour roues de véhicules, comprenant :
- un premier tambour de formage (110 ; 25) dans une attitude initiale, respectivement horizontale ou verticale ;
- un élément de rotation oblique (40) agencé au niveau d'une station de service (S2 ; S2') et ayant un axe de rotation (R) incliné de 45° par rapport à une direction sensiblement horizontale, ledit élément de rotation oblique (40) étant configuré pour entraîner ledit premier tambour de formage (110 ; 25) en rotation autour dudit axe de rotation (R) jusqu'à ce que ledit premier tambour de formage (110 ; 25) prenne une attitude finale, respectivement verticale ou horizontale ;
- un élément de déplacement (21) configuré pour déplacer ledit premier tambour de formage (110 ; 25) d'une première position (P0 ; P0') à une deuxième position (P2 ; P2') selon une première direction de déplacement (A ; A') tandis que le premier tambour de formage (110 ; 25) est dans ladite position horizontale ;
- au moins une station de construction (W1 ; W1') agencée en amont de ladite deuxième position (P2 ; P2') par rapport à ladite première direction de déplacement (A ; A') et configuré pour construire au moins une partie d'un premier élément structurel (3 ; 8') de pneumatique sur ledit premier tambour de formage (110 ; 25) .

9. Installation (1) selon la revendication 8, dans laquelle ladite station de service (S2 ; S2') est adjacente à ladite deuxième station (P2) ou à ladite première station (P0') .

10. Installation (1) selon la revendication 8 ou 9, dans laquelle ledit élément de rotation oblique (40) comprend :
- un châssis de base (40a) ;
- un groupe mobile (40b) associé de manière rotative audit châssis de base (40a) et comprenant un premier bras de support (42) configuré pour supporter ledit premier tambour de formage (110 ; 25) et ayant un premier axe de montage s'étendant le long de ladite direction sensiblement horizontale ;
- un moteur (48) configuré pour entraîner la rotation dudit groupe mobile (40b) par rapport audit châssis de base (40a) autour dudit axe de rotation (R).

11. Installation (1) selon la revendication 10, dans laquelle ledit groupe mobile (40b) comprend un deuxième bras de support (46) configuré pour supporter un deuxième tambour de formage (110' ; 210) et ayant un deuxième axe de montage sensiblement perpendiculaire audit premier axe de montage.

12. Élément de rotation oblique (40) pour une installation (1) de fabrication de pneumatiques pour roues de véhicules, comprenant :
- un châssis de base (40a) ;
- un groupe mobile (40b) associé de manière rotative audit châssis de base (40a) et comprenant un premier bras de support (42) configuré pour supporter un premier tambour de formage (110 ; 25) et ayant un premier axe de montage s'étendant le long d'une direction sensiblement horizontale ;
- un moteur (48) configuré pour entraîner la rotation dudit groupe mobile (40b) par rapport audit châssis de base (40a) autour d'un axe de rotation (R) incliné de 45° par rapport à ladite direction sensiblement horizontale.

13. Élément de rotation oblique (40) selon la revendication 12, dans lequel ledit groupe mobile (40b) comprend un deuxième bras de support (46) configuré pour supporter un deuxième tambour de formage (110' ; 210) et ayant un deuxième axe de montage sensiblement perpendiculaire audit premier axe de montage.

14. Élément de rotation oblique (40) selon la revendication 12 ou 13, comprenant au moins un premier dispositif d'amortissement (43) associé fixement audit premier bras de support (42) à une partie d'extrémité libre de celui-ci et configuré pour se coupler avec ledit premier tambour de formage (110 ; 25) tout en laissant un degré de liberté le long d'une direction parallèle audit premier axe de montage.

15. Élément de rotation oblique (40) selon la revendication 14 lorsqu'elle dépend de la revendication 13, comprenant un deuxième dispositif d'amortissement (47) associé de manière fixe audit deuxième bras de support (46) à une partie d'extrémité libre de celui-ci et configuré pour se coupler audit deuxième tambour de formage (110' ; 210) tout en laissant un degré de liberté le long d'une direction parallèle audit deuxième axe de montage, dans lequel ledit deuxième dispositif d'amortissement (47) est identique audit premier dispositif d'amortissement (43).
